# EUROPÄISCHE PATENTSCHRIFT

(11) **EP 1 613 515 B1**
(45) Veröffentlichungstag und Bekanntmachung des Hinweises auf die Patenterteilung: **02.08.2006**
(21) Anmeldenummer: 04726983.2
(22) Anmeldetag: 13.04.2004
(51) Int. Cl.: B60R 22/24

(54) **UMLENKVORRICHTUNG FÜR EINEN SICHERHEITSGURT**
DEFLECTING DEVICE FOR A SAFETY BELT
DISPOSITIF INVERSEUR POUR CEINTURE DE SECURITE

(30) Priorität: 17.04.2003 DE 10317709
(43) Veröffentlichungstag der Anmeldung: 11.01.2006
(73) Patentinhaber: AUTOLIV DEVELOPMENT AB, 447 83 Vargarda (SE)
(72) Erfinder: CORD, Hans-Jörg, 22848 Norderstedt (DE); JANZEN, Knut, 24576 Bad Bramstedt (DE)
(74) Vertreter: Stornebel, Kai
(86) Internationale Anmeldenummer: PCT/EP2004/003857
(87) Internationale Veröffentlichungsnummer: WO 2004/091983

(56) Entgegenhaltungen:
- DE-A- 2 228 127
- DE-A- 2 945 174
- DE-A- 19 808 922
- DE-U- 20 205 570

## Beschreibung

Die Erfindung betrifft eine Umlenkvorrichtung für einen Sicherheitsgurt nach dem Oberbegriff des Anspruchs 1.

Aus der DE 202 05 570 U1 ist eine derartige Umlenkvorrichtung für einen Sicherheitsgurt in Kraftfahrzeugen bekannt, welche im wesentlichen ein Führungselement mit einem auch als Gurtöse bezeichneten Führungsspalt für den Sicherheitsgurt aufweist. Das Führungselement ist als ein durch Kaltumformung aus Stahlblech hergestellter einstückigen Metallkörper ausgebildet, der durch eine Befestigungsöffnung in einer rückseitigen Montagefläche hindurch mittels einer Befestigungsschraube an der Kraftfahrzeugkarosserie befestigt ist. Ferner ist an dem Führungselement ein Kunststoffadapter angeschlossen, der zur Fixierung desselben am Führungselement einen in die Befestigungsöffnung einsetzbaren zylindrischen Kragen und fernerhin einen an der oberen Begrenzung der Gurtöse fixierbaren Verdrängungskörper zur Begrenzung der Spaltbreite des Führungsspaltes aufweist.

Als nachteilig an dieser Lösung hat sich herausgestellt, dass der Schraubenkopf der Befestigungsschraube sich aufgrund des innerhalb der Befestigungsöffnung angeordneten zylindrischen Kragens des Adapters lediglich mit einer als äußerst gering einzuschätzenden Überdeckung am Führungselement abstützt. Durch diese geringe Überdeckung ist bei hoher Belastung, wie sie beispielsweise bei einem Crash zu verzeichnen ist, die Gefahr des Ausknöpfens des Schraubenkopfes aus der Befestigungsöffnung des Führungselementes gegeben.

Um diesem Mißstand zu begegnen, ist es an sich bekannt, die Überdeckung mittels entsprechend großer Unterlegscheiben zu vergrößern oder Befestigungsschrauben mit Sonderabmaßen, insbesondere mit größeren Schraubenköpfen, zu verwenden, welches jedoch zu einem erhöhten Material- und Kostenaufwand führt. Hier setzt die nachfolgend beschriebene Erfindung an.

Ausgehend von einem Stand der Technik gemäß der DE 202 05 570 U1 ist es die Aufgabe der Erfindung, eine verbesserte Vorrichtung der gattungsbestimmenden Art zu schaffen, die unter Berücksichtigung der Fixierung eines an sich bekannten Adapters am Führungselement mit einfachen und kostengünstigen Maßnahmen wirkungsvoll ein Ausknöpfen des Schraubenkopfes der Befestigungsschraube aus der Befestigungsöffnung verhindert.

Erfindungsgemäß wird die Aufgabe in Verbindung mit den Merkmalen im Oberbegriff des Anspruchs 1 dadurch gelöst, dass die Befestigungsöffnung des Führungselementes zum einen durch eine Bohrung gebildet ist, deren Durchmesser zur Erzielung einer größtmöglichen Überdeckung der verfügbaren freien Anlagefläche des Führungselementes durch den Schraubenkopf der Befestigungsschraube geringfügig größer als der Außendurchmesser des Schraubenschaftes gewählt ist, und zum anderen der Bohrung eine Mehrzahl von über den Umfang derselben verteilte Nuten zugeordnet sind, in die ihrerseits im montierten Zustand des Adapters in axialer Richtung der Bohrung weisende Fixierarme des Adapters hineinreichen.

Dabei ist es besonders vorteilhaft, wenn die Nuten gleichmäßig über dem Umfang der Bohrung verteilt sind, so dass diese eine Zentrierung der Befestigungsschraube bewirken.

In Weiterbildung der Erfindung ist vorgesehen, dass die Fixierarme in Grenzen elastisch ausgebildet sind. Des Weiteren wird vorgeschlagen, dass die Fixierarme an ihrem freien Ende jeweils eine radial nach außen weisende und im montierten Zustand hinter die Wandung des Führungselementes greifende hakenförmige Struktur aufweisen. Zweckmäßigerweise sind die Fixierarme, beziehungsweise ist deren hakenförmige Struktur mit einer Führungsschräge versehen.

In vorteilhafter Weise, das heißt ohne zusätzliche Bauteile wie Unterlegscheiben beziehungsweise ohne Sonderanfertigung der Befestigungsschraube, wird im Hinblick auf den Stand der Technik mit der vorgeschlagene Umlenkvorrichtung eine größtmögliche Überdeckung der verfügbaren freien Anlagefläche des Führungselementes durch den Schraubenkopf der Befestigungsschraube realisiert und demgemäß ein Ausknöpfen des Schraubenkopfes aus der Befestigungsöffnung wirkungsvoll behindert. Schließlich ist vorteilhaft auch eine exakte Fixierung des Adapters am Führungselement, also auch eine Verdrehsicherung desselben in Bezug auf das Führungselement gewährleistet, ohne die vorerwähnte Überdeckung des Führungselementes durch den Schraubenkopf maßgeblich zu mindern.

Eine andere Ausgestaltung der erfindungsgemäß ausgebildeten Umlenkvorrichtung sieht vor, dass die Fixierarme im montierten Zustand des Adapters einen Kreis mit einem geringfügig kleineren Innendurchmesser bilden als der Innendurchmesser der Bohrung. Der Vorteil dieser Bauweise liegt darin, dass durch die Durchmesserreduzierung der Fixierarme dafür gesorgt ist, dass die Befestigungsschraube an den Fixierarmen geräuscharm anliegt.

Schließlich kann die Umlenkvorrichtung so ausgebildet sein, dass die Fixierarme des Adapters relativ zu dem Verdrängungskörper derart positioniert sind, dass sich im montierten Zustand des Adapters eine im wesentlichen konstante Spaltbreite des Führungsspaltes ergibt. Durch diese Maßnahme ist gewährleistet, dass sich der Adapter nach der Montage nicht mehr gegenüber dem Führungselement verdrehen kann und so eine konstante, vorzugsweise parallele Spaltgeometrie zur Gurtführung in der Umlenkvorrichtung bestehen bleibt.

Die Erfindung wird nachstehend anhand eines in den Zeichnungen schematisch dargestellten Ausführungsbeispieles näher erläutert. Es zeigen:
- Fig. 1: eine Explosionsdarstellung der erfindungsgemäßen Umlenkvorrichtung,
- Fig. 2: eine zusammengebaute Umlenkvorrichtung in einer perspektivischen Ansicht,
- Fig. 3: eine Draufsicht auf die Umlenkvorrichtung nach Fig. 2,
- Fig. 4: einen Schnitt I-I nach Fig. 3, und
- Fig. 5: eine Ansicht A nach Fig. 1.

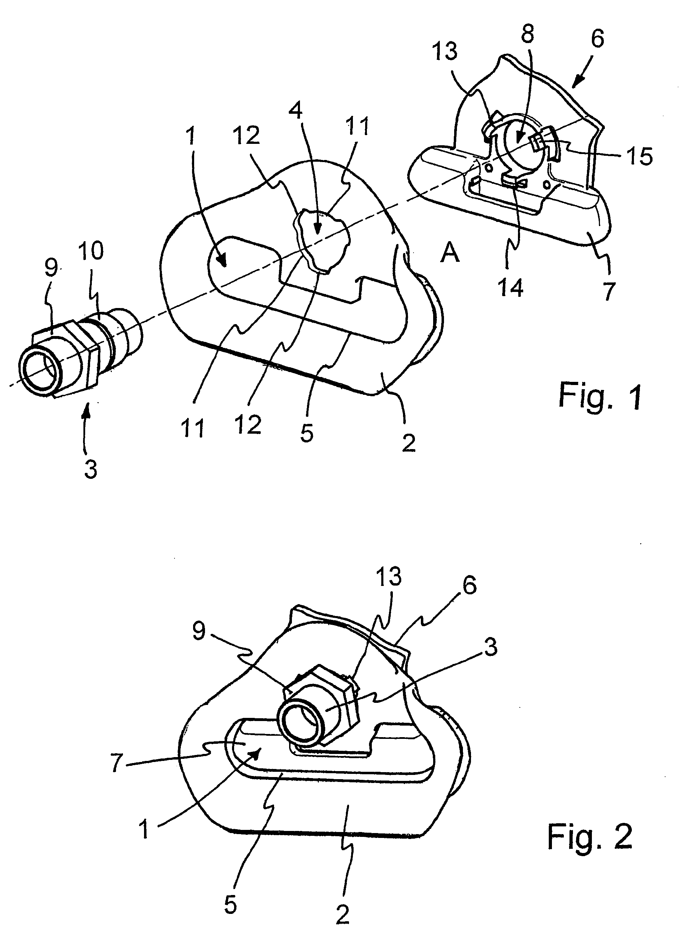

Gemäß Fig. 1 bis Fig. 5 besteht die Umlenkvorrichtung für einen nicht näher gezeigten Sicherheitsgurt zunächst aus einem mit einem Führungsspalt 1 für den besagten Sicherheitsgurt versehenes Führungselement 2, welches mittels einer durch eine Befestigungsöffnung in Form einer Bohrung 4 im Führungselement 2 hindurch geführten Befestigungsschraube 3 an einem nicht näher dargestellten tragenden Bauteil der Kraftfahrzeugkarosserie, beispielsweise an einer Fahrzeugsäule, befestigt ist. Der Führungsspalt 1 weist seinerseits eine gerundete Lauffläche 5 für den Sicherheitsgurt auf, um eine ungehinderte Führung desselben zu gewährleisten.

Das Führungselement 2 ist wie vorliegend vorzugsweise als Ganzmetallbauteil einstückig durch Kaltumformung aus einem Stahlblech hergestellt oder durch eine kunststoffumspritzte Stahlplatine gebildet.

Zwischen dem Führungselement 2 und dem tragenden Bauteil ist des Weiteren ein an sich bekannter sowie vorzugsweise im Spritzgießverfahren hergestellter Adapter 6 aus Kunststoff mit einem Verdrängungskörper 7 angeordnet, der ebenfalls eine von der Befestigungsschraube 3 durchdrungene Öffnung 8 aufweist. Das Führungselement 2 und der Adapter 6 sind somit koaxial zueinander angeordnet, wobei der Verdrängungskörper 7 bekanntermaßen zur Begrenzung der Spaltbreite des Führungsspaltes 1 dient.

Um der gestellten Aufgabe gerecht zu werden, nämlich unter Berücksichtigung der Fixierung des Adapters 6 am Führungselement 2 mit einfachen und kostengünstigen Maßnahmen wirkungsvoll ein Ausknöpfen des Schraubenkopfes 9 der Befestigungsschraube 3 aus der Befestigungsöffnung beziehungsweise der Bohrung 4 des Führungselementes 2 zu verhindern, ist der Durchmesser der Bohrung 4 erfindungsgemäß geringfügig größer gewählt als der Außendurchmesser des Schraubenschaftes 10. Hierdurch wird eine größtmögliche Überdeckung der verfügbaren freien Anlagefläche 11 des Führungselementes 2 durch den Schraubenkopf 9 erzielt.

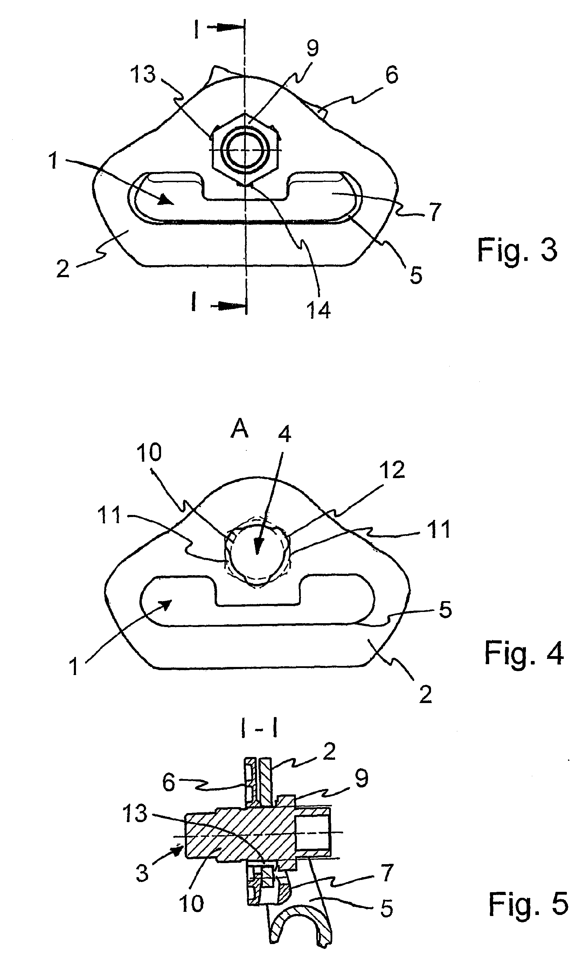

Dies mag für sich gesehen zunächst nicht bemerkenswert sein, jedoch in Kombination mit der Anordnung einer Mehrzahl, nämlich von zwei oder mehr vorzugsweise gleichmäßig über den Umfang der Bohrung 4 des Führungselementes 2 verteilten Nuten 12, in die ihrerseits im montierten Zustand der Umlenkvorrichtung in axialer Richtung der Bohrung 4 weisende Fixierarme 13 des Adapters 6 hineinreichen (Fig. 4), wird in bezug auf eine aufgabengemäß störungsfreie Funktion der Umlenkvorrichtung auch im Crashfall, einhergehend mit einer Fixierung des Adapters 6 am Führungselement 2, eine wesentliche Verbesserung des Standes der Technik erzielt.

Vorliegend sind drei Nuten 12 vorgesehen, zwischen denen Bereiche der freien Anlagefläche 11 für den Schraubenkopf 9 geschaffen, beziehungsweise erhalten sind (Fig. 4).

Wie in der Beschreibungseinleitung bereits erläutert, werden nach dem Stand der Technik (DE 202 05 570 U1) diese Bereiche weitestgehend durch einen am Adapter 6 fest angeordneten zylindrischen Kragen ersetzt, der seinerseits nachteilig die Überdeckung der verfügbaren freien Anlagefläche 11 des Führungselementes 2 durch den Schraubenkopf 9 mindert.

In durchgeführten Versuchen hat es sich als vorteilhaft erwiesen, die Fixierarme 13 des Adapters 6 in Grenzen elastisch auszubilden, um während der Montage die Einführung derselben in die Nuten 12 zu erleichtern und obendrein noch einen gewissen Kraftschluß zu erzeugen.

Fernerhin kann es vorteilhaft sein, wie insbesondere in Fig. 1 und Fig. 3 gezeigt, die Fixierarme 13 an ihren freien Enden jeweils mit einer radial nach außen weisenden hakenförmigen Struktur 14 zu versehen, welche im montierten Zustand hinter die Wandung des Führungselementes 2 greifen und somit einen zusätzlichen Formschluß gewährleisten.

Ebenso hat sich eine Führungsschräge 15 an den Fixierarmen 13 beziehungsweise an deren hakenförmiger Struktur 14 als vorteilhaft erwiesen, wodurch ebenfalls die Montage des Adapters 6 am Führungselement 2 erleichtert wird.

### Bezugszeichen

- 1: Führungsspalt
- 2: Führungselement
- 3: Befestigungsschraube
- 4: Bohrung
- 5: Lauffläche
- 6: Adapter
- 7: Verdrängungskörper
- 8: Öffnung
- 9: Schraubenkopf
- 10: Schraubenschaft
- 11: Anlagefläche
- 12: Nuten
- 13: Fixierarme
- 14: Hakenförmige Struktur
- 15: Führungsschrägen

## Patentansprüche

1. Umlenkvorrichtung für einen Sicherheitsgurt an Kraftfahrzeugen, bestehend aus einem mit einem Führungsspalt (1) für den Sicherheitsgurt versehenen Führungselement (2), welches mittels einer Befestigungsschraube (3) an einem Bauteil der Kraftfahrzeugkarosserie befestigt ist, und einem Adapter (6) mit einem Verdrängungskörper (7) zur Begrenzung der Spaltbreite des Führungsspaltes (1), wobei der Adapter (6) ebenfalls eine von der Befestigungsschraube (3) durchdrungene Öffnung aufweist und innerhalb der Befestigungsöffnung des Führungselementes (2) fixiert ist,
**dadurch gekennzeichnet,**
**dass** die Befestigungsöffnung des Führungselementes (2) zum einen durch eine Bohrung (4) gebildet ist, deren Durchmesser zur Erzielung einer größtmöglichen Überdeckung der verfügbaren freien Anlagefläche (11) des Führungselementes (2) durch den Schraubenkopf (9) der Befestigungsschraube (3) geringfügig größer als der Außendurchmesser des Schraubenschaftes (10) gewählt ist, und dass zum anderen der Bohrung (4) eine Mehrzahl von über den Umfang derselben verteilte Nuten (12) zugeordnet sind, in die ihrerseits im montierten Zustand des Adapters (6) in axialer Richtung der Bohrung (4) weisende Fixierarme (13) des Adapters (6) hineinreichen.

2. Umlenkvorrichtung nach Anspruch 1, **dadurch gekennzeichnet, dass** die Fixierarme (13) in Grenzen elastisch ausgebildet sind.

3. Umlenkvorrichtung nach einem der Ansprüche 1 und 2, **dadurch gekennzeichnet, dass** die Fixierarme (13) an ihrem freien Ende jeweils eine radial nach außen weisende und im montierten Zustand hinter die Wandung des Führungselementes (2) greifende hakenförmige Struktur (14) aufweisen.

4. Umlenkvorrichtung nach einem der Ansprüche 1 bis 3, **dadurch gekennzeichnet, dass** die Fixierarme (13) beziehungsweise deren hakenförmige Struktur (14) mit einer Führungsschräge (15) versehen sind.

5. Umlenkvorrichtung nach einem der Ansprüche 1 bis 4, **dadurch gekennzeichnet, dass** die Nuten (12) gleichmäßig über dem Umfang der Bohrung (4) verteilt sind.

6. Umlenkvorrichtung nach wenigstens einem der vorherigen Ansprüche, **dadurch gekennzeichnet, dass** die Fixierarme (13) im montierten Zustand des Adapters (6) einen Kreis mit einem geringfügig kleineren Innendurchmesser bilden als der Innendurchmesser der Bohrung (4).

7. Umlenkvorrichtung nach wenigstens einem der vorherigen Ansprüche, **dadurch gekennzeichnet, dass** die Fixierarme (13) relativ zu dem Verdrängungskörper (7) derart positioniert sind, dass sich im montierten Zustand des Adapters (6) eine im wesentlichen konstante Spaltbreite des Führungsspaltes (1) ergibt.

## Claims

1. Deflecting device for a safety belt on motor vehicles, comprising a guide element (2) which is provided with a guide gap (1) for the safety belt and is fastened to a component of the motor vehicle body by means of a fastening screw (3), and an adapter (6) with a displacement element (7) for limiting the gap width of the guide gap (1), the adapter (6) likewise having an opening penetrated by the fastening screw (3) and being fixed within the fastening opening of the guide element (2), **characterized in that**, firstly, the fastening opening of the guide element (2) is formed by a hole (4), the diameter of which is selected to be slightly larger than the outside diameter of the screw shank (10) in order to obtain the greatest possible overlapping of the available free bearing surface (11) of the guide element (2) by the screw head (9) of the fastening screw (3), and **in that**, secondly, the hole (4) is assigned a multiplicity of grooves (12) which are distributed over its circumference and into which reach fixing arms (13) of the adapter (6) which, for their part, point in the axial direction of the hole (4) in the fitted state of the adapter (6).

2. Deflecting device according to Claim 1, **characterized in that** the fixing arms (13) are of elastic design within limits.

3. Deflecting device according to either of Claims 1 and 2, **characterized in that** the fixing arms (13) in each case have, at their free end, a hook-shaped structure (14) which points radially outwards and, in the fitted state, engages behind the wall of the guide element (2).

4. Deflecting device according to one of Claims 1 to 3, **characterized in that** the fixing arms (13) are or their hook-shaped structure (14) is provided with a guide slope (15).

5. Deflecting device according to one of Claims 1 to 4, **characterized in that** the grooves (12) are distributed uniformally over the circumference of the hole (4).

6. Deflecting device according to at least one of the preceding claims, **characterized in that**, in the fitted state of the adapter (6), the fixing arms (13) form a circle with a slightly smaller inside diameter than the inside diameter of the hole (4).

7. Deflecting device according to at least one of the preceding claims, **characterized in that** the fixing arms (13) are positioned relative to the displacement element (7) in such a manner that, in the fitted state of the adapter (6), an essentially constant gap width of the guide gap (1) is produced.

## Revendications

1. Dispositif inverseur pour une ceinture de sécurité de véhicules automobiles, constituée par un élément de guidage (2) comportant une fente de guidage (1) pour la ceinture de sécurité, qui est fixé à une partie de construction de la carrosserie du véhicule automobile, au moyen d'une vis de fixation (3) et un adaptateur (6), comportant un corps déplaceur (7) pour limiter la largeur de fente de la fente de guidage (1), dans lequel l'adaptateur (6) comporte également une ouverture traversée par la vis de fixation (3) et est fixé à l'intérieur de l'ouverture de fixation de l'élément de guidage (2), **caractérisé en ce que** l'ouverture de fixation de l'élément de guidage (2) est d'une part formée par un perçage (4) dont le diamètre, pour obtenir un recouvrement aussi grand que possible de la surface libre de portée (11) disponible de l'élément de guidage (2) par la tête de vis (9) de la vis de fixation (3), est choisi légèrement plus grand que le diamètre extérieur de la tige (10) de la vis et **en ce que** d'autre part le perçage (4), comporte une pluralité de gorges (12) réparties sur son pourtour, dans lesquelles, à l'état monté de l'adaptateur (6) s'engagent des bras de fixation (13) de l'adaptateur (6) s'étendant dans la direction axiale du perçage (4).

2. Dispositif inverseur selon la revendication 1, **caractérisé en ce que** les bras de fixation (13) sont réalisées avec une élasticité limitée.

3. Dispositif inverseur selon l'une des revendications 1 ou 2, **caractérisé en ce que** les bras de fixation (13) présentent chacun une structure en forme de crochet (14) s'étendant vers l'extérieur venant en prise, à l'état monté derrière la paroi de l'élément de guidage (2).

4. Dispositif inverseur selon l'une des revendications 1 à 3, **caractérisé en ce que** les bras de fixation (13) ou la structure en forme de crochet (14) présentent une pente de guidage (15).

5. Dispositif inverseur selon l'une des revendications 1 à 4, **caractérisé en ce que** les gorges (12) sont réparties régulièrement sur le pourtour du perçage (4).

6. Dispositif inverseur selon l'une au moins des revendications précédentes, **caractérisé en ce que** les bras de fixation (13) forment, lorsque l'adaptateur (6) est monté, un cercle dont le diamètre est légèrement inférieur au diamètre intérieur du perçage (4).

7. Dispositif inverseur selon l'une au moins des revendications précédentes, **caractérisé en ce que** les bras de fixation (13) sont fixés relativement au corps déplaçeur (7) de façon qu'à l'état monté de l'adaptateur (6) on obtienne une largeur de fente sensiblement constante de la fente de guidage (1).
